# EUROPEAN PATENT SPECIFICATION

(11) **EP 0 360 207 B1**
(45) Date of publication and mention of the grant of the patent: **03.05.1995**
(21) Application number: 89117278.5
(22) Date of filing: 19.09.1989
(51) Int. Cl.: G11B 5/596, G11B 20/12

(54) **Servo data for a magnetic data recording medium**
Servodaten für einen magnetischen Datenspeicher
Données d'asservissement pour un support d'enregistrement magnétique

(30) Priority: 20.09.1988 JP 233716/88
(43) Date of publication of application: 28.03.1990
(73) Proprietor: FUJITSU LIMITED, Kawasaki-shi, Kanagawa 211 (JP)
(72) Inventor: Tomiyama, Kazunobu c/o FUJITSU LIMITED, Nakahara-ku Kawasaki-shi Kanagawa 211 (JP)
(74) Representative: Sunderland, James Harry

(56) References cited:
- US-A- 4 636 885
- US-A- 4 682 253
- PATENT ABSTRACTS OF JAPAN vol. 11, no. 183 (M-598)(2630) 12 June 1987 & JP-A-62-12970
- PATENT ABSTRACTS OF JAPAN vol. 5, no. 9 (P-45)(681) 21 January 1981 & JP-A-55-139639

## Description

The present invention relates to servo data for a magnetic data recording medium, for instance to the writing of servo signals on a servo disk in a magnetic disk apparatus.

Data heads which write and read data are properly positioned on a designated track on a data surface of a data disk by reading servo signals previously written on a servo disk. This is called closed loop servo control. Servo signals are usual written on a surface, which is called a servo-surface, of a magnetic disk. As one kind of closed loop servo control, there is a servo control system performed using a servo disk or servo-surface of a disk which is exclusively used for servo control. This kind of control system will be referred to as "servo-surface servo" hereinafter.

There is another control system which is also a kind of closed loop servo control and is performed using servo data which is stored on a data surface of a data disk, instead of using a servo disk or servo surface as in the case of "servo-surface servo". This kind of control system will be referred to as "data-surface servo" hereinafter. However, "servo-surface servo" has represented the mainstream of magnetic disk apparatuses for a long time.

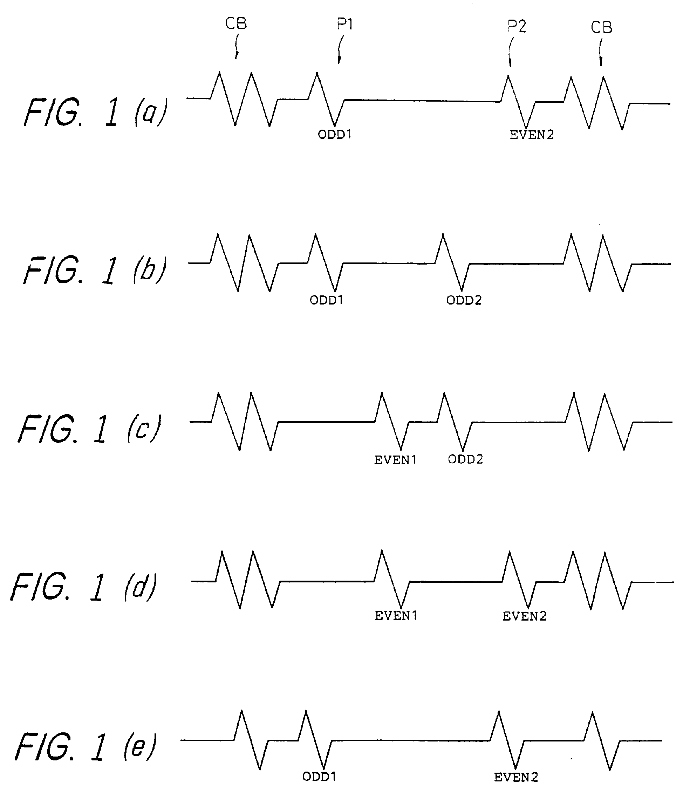

Data heads in a magnetic disk apparatus are position-controlled, so as to be on-track on a data disk during writing or reading, by the way in which a servo head reads servo signals stored on a servo disk (or a servo surface of a disk) in "servo-surface servo". Figs. 1(a) to 1(e) provide a waveform chart showing a group of waveforms successively produced when a servo head reads servo data stored on a servo disk. The transversal direction (left to right) of this chart corresponds to directions of the circumferences of tracks on the servo disk and the longitudinal direction (top to bottom) of this chart corresponds to radial directions of the servo disk. In Figs. 1(a) to 1(e), each waveform is schematically expressed using triangular wave representations for simplicity. The waveforms (a), (b), (c) and (d) correspond to what are called the normal bits and are produced respectively from four adjacent tracks. Namely, waveforms (a), (b), (c) and (d) correspond to track 1, track 2, track 3 and track 4 on a data disk, for instance. Waveform (e) corresponds to what is called the index bit which is written in a portion of each track.

The signals indicated by CB are clock bits to be used as a standard clock in demodulation of servo signals and in data writing. The signals indicated by P1 and P2 are positional bits. Positional bits P1 are expressed as two kinds of bit named ODD1 or EVEN1 and positional bits P2 are expressed by ODD2 and EVEN2, according to their positions. Further, the waveform (e) is expressed by a combination of ODD1 and EVEN2 in this case. These four kinds of bits are written periodically in the tracks of the servo disk.

The positioning of a data head on a track of a data disk is performed by reading servo signals from the servo disk by a servo head, demodulating the positional bits (P1 and P2) and detecting the peak levels of P1 and P2.

In "servo-surface servo", the servo signals are read from the servo disk and the positional bits are demodulated so that the data head is positioned, even when the data head is writing data on the data disk. At that time, electromagnetic noise is generated near the data head. Particularly, noise of high level is generated when data is written, as compared with when data is read. The high-level noise disturbs demodulation of the positional bits, and as a result correct reading of servo data becomes impossible. Disturbance by electromagnetic noise generated from the data head which is nearest to the servo head is most significant. The influence of electromagnetic noise on the demodulation of positional bits is further enhanced for the following reason. A standard clock for writing data on a data disk (write clock) is usually produced by a phase lock oscillator which is synchronized to a clock for reading servo signals (servo clock), in order to eliminate effects of fluctuations of rotational speed of the magnetic disk on the detection of positional bit signals. Therefore, the phase relationship between the write clock and the servo clock is invariable; as a consequence, servo signals are synchronised to electromagnetic noise.

A conventional method of eliminating the effects of electromagnetic noise generated from a data head is to shield the servo head electromagnetically by a shield. However, space large enough to provide an effective shield may not be available as magnetic disk apparatus is made smaller, following recent trends towards miniaturisation. Moreover, synchronisation between write clock and servo clock becomes indispensable when magnetic disk apparatus employing higher recording density is used, as is becoming more common.

Another method for eliminating the effects of electromagnetic noise is disclosed in Japanese Laid-open Patent Application: SHO 58-97164, entitled "A Magnetic Disk Apparatus", by S. Sengoku, 9th June 1983. The method disclosed here involves utilisation of a signal processing technique instead of an electromagnetic shield. However, what is disclosed relates to adjustment of a phase difference between a data writing clock and a servo signal. This does not relate to the writing of servo signals on a servo disk.

A method of writing servo signals on a servo disk is disclosed in Japanese Laid-open Patent Application: SHO 61-26922, entitled "A Magnetic Disk Apparatus", by T. Iwai and K. Nishimura, 6th February 1986. In this method, electromagnetic noise appears symmetrically on two positional bit signals which are used for demodulation of servo signals. For this purpose, the time difference between the two positional bit signals must be an even multiple or about an even multiple of the period of write bits. This condition is hardly likely to be satisfied for an arbitrary stored servo data pattern. That is, the method disclosed here is effective only for a special servo data pattern to be written.

A method is required of eliminating or reducing the influence of electromagnetic noise generated from a data head during data writing, on reading of an arbitrary stored servo data pattern.

According to the present invention there is provided a method of writing servo data on a servo data recording medium of a magnetic data recording means, the servo data including servo bytes each comprising a clock bit and positional bits at regular temporal dispositions in the byte which are spaced from the clock bit, the positional bits serving for use in positioning a magnetic head on a data recording medium of the magnetic data recording means, the method comprising:-
generating a succession of servo bytes, and applying those servo bytes to the servo data recording medium, as the servo data;
characterised in that:-
the temporal dispositions of the positional bits in successive bytes of the succession, with regard to the respective clock bits in the bytes, are displaced from said regular disposition by a small fraction of the length of one servo byte, from servo byte to servo byte of the succession, being located on one and the same servo track, and the relative temporal dispositions of the positional bits in the servo bytes of the succession all fall within the width of a gate pulse, which width defines a range over which positional bits can be detected to serve for use in servo data demodulating means.

An embodiment of the present invention can provide improvement in relation to positioning control of a data head on a data track of a data disk.

An embodiment of the present invention can provide improvement in relation to a method of writing servo data on a servo disk so as to achieve or more nearly achieve freedom from disturbance by electromagnetic noise produced during writing of data on a data disk.

An embodiment of the present invention can contribute towards reduction of production costs of magnetic disk apparatus.

In accordance with an embodiment of the present invention servo signals are written on a servo disk by a servo head so that positional bits are written shifting (with relative shifts of timing) by selected amounts, from servo byte to servo byte, within limits of tolerance of a demodulation gate.

According to the present invention there is provided apparatus for writing servo data on a servo data recording medium of a magnetic data recording means, the servo data including servo bytes each comprising a clock bit and positional bits at regular temporal dispositions in the byte which are spaced from the clock bit, the positional bits serving for use by a head positioner in positioning a magnetic head on a data recording medium of the magnetic data recording means, the apparatus comprising:-
means for generating a succession of servo bytes, and applying those servo bytes to the servo data recording medium, as the servo data;
characterised in that:-
the said means are so operable that the temporal dispositions of the positional bits in successive bytes of the succession, with regard to the respective clock bits in the bytes, are displaced from said regular disposition by a small fraction of the length of one servo byte, from servo byte to servo byte of the succession, being located on one and the same servo track, and the relative temporal dispositions of the positional bits in the servo bytes of the succession all fall within the width of a gate pulse, which width defines a range over which positional bits can be detected to serve for use in servo data demodulating means.

An embodiment of the present invention provides writing apparatus composed of a servo pattern generator, a delay circuit and multiplexers, for use in writing servo data on a servo disk. The servo pattern generator generates clock bits and positional bits. Based on these bit signals, a pattern of magnetisation is written on a servo track of the servo disk. The positional bit signals are delayed, by a definite time which is called a shift, every servo byte. This shift should be larger than the half-width of the waveform of electromagnetic noise produced during writing of data on a data disk by a data head, so that electromagnetic noise is not (repeatedly) superposed on the positional bit signals. On the other hand, the shift should be smaller than the gate time available for demodulation of the positional bit signals. The shifted servo data to be written on a servo disk is produced from a multiplexer, selecting the quantity of the shift to be applied.

When the shift of the positional bits is performed in four steps, for instance, electromagnetic noise can be synchronised with (can overlap) positional bit signals in one in every four servo bytes at most. The peak level of a positional bit may be detected by a conventional method. Therefore, the influence of electromagnetic noise is reduced to one-fourth, being levelled or averaged over the servo track.

Such writing apparatus which writes shifted write data is used exclusively for production of the servo data on the servo disk and is not or need not be set up in magnetic disk apparatus itself.

According to the present invention there is provided magnetic disk recording apparatus, comprising a data head for writing data on a track of a data disk of the apparatus, and a servo head for reading servo data on a servo track of a servo disk of the apparatus, a head positioner for positioning the data head on the track of the data disk in dependence upon the servo data read by the servo head, the servo data including servo bytes each comprising a clock bit and positional bits at regular temporal dispositions in the byte which are spaced from the clock bit;
characterised in that:-
the servo bytes form a succession in which the temporal dispositions of the positional bits in successive bytes of succession, with regard to the respective clock bits in the bytes, are displaced from said regular disposition by a small fraction of the length of one servo byte, from servo byte to servo byte of the succession, being located on one and the same servo track, and the relative temporal dispositions of the positional bits in the servo bytes of the succession all fall within the width of a gate pulse, which width defines a range over which positional bits can be detected to serve for use in servo data demodulating means.

Reference is made, by way of example, to the accompanying drawings, in which:-
Figs. 1(a) to 1(e) show a group of waveforms which together provide a chart schematically illustrating current flowing in a servo head when servo data is read;
Fig. 2 schematically represents a waveform of electromagnetic noise, generated from a data head during a period when the data head is writing data on a data disk, as appearing in current flowing in a servo head when servo data is read;
Fig. 3 is a schematic diagram illustrating the shifting of positional bits, using a time chart of one servo byte width, provided in accordance with an embodiment of the present invention;
Fig. 4, enlarged as compared with Fig. 3, illustrates symmetry of shifting positional bits with respect to a regular position L, provided by an embodiment of the present invention, the limit of tolerance of a gate length (or gate time) for demodulation of the positional bits being indicated by dotted lines;
Fig. 5 is a schematic block diagram of circuitry for generating servo data to be written, in accordance with an embodiment of the present invention;
Fig. 6 schematically illustrates delay times and shifts of positional bit in first, second, third and fourth servo bytes; and
Fig. 7 is a time chart illustrating signals provided in the circuitry of Fig. 5;
Figs. 8(a) to 8(d) are a group of schematic waveforms providing a chart illustrating currents flowing in a servo head when servo data provided in accordance with an embodiment of the present invention is read;
Fig. 9 is a partial schematic illustration of a servo disk storing servo data as provided by an embodiment of the present invention;
Fig. 10 is a schematic block diagram of apparatus provided for writing servo data on a servo disk, in or for an otherwise conventional magnetic disk apparatus; and
Fig. 11 is a schematic block diagram of an otherwise conventional magnetic disk apparatus having a servo disk storing servo data as provided by an embodiment of the present invention.

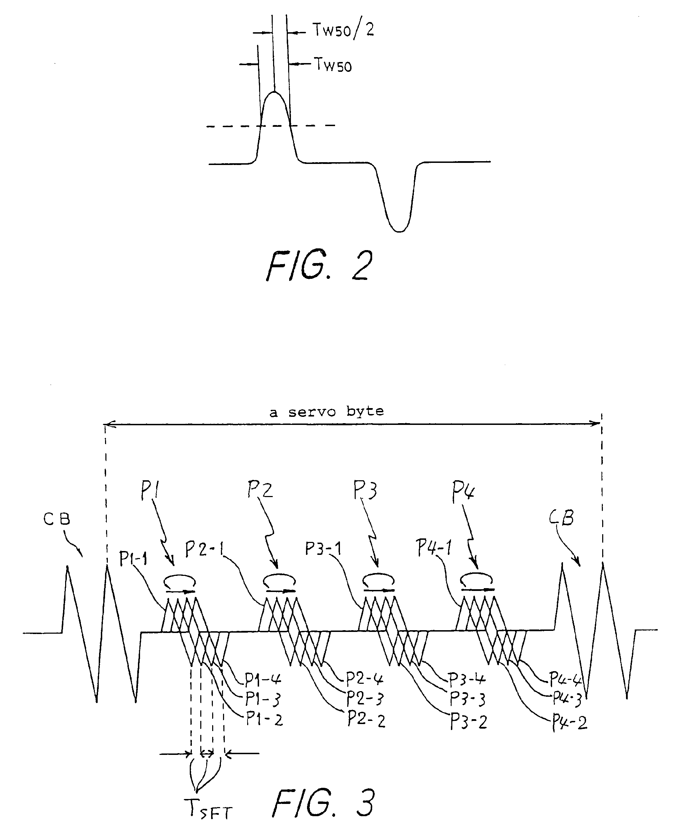

Electromagnetic noise generated from a data head when the data head is writing data on a data disk is schematically illustrated in Fig. 2. The half-width of the waveform of the electromagnetic noise, (1/2)T_{W50}, is 20 ns in this case. Fig. 3 schematically illustrates a servo pattern, over a one servo byte width, illustrating four steps of positional bit shifting in accordance with an embodiment of the present invention (effectively, four successive servo bytes are overlayed, to illustrate the shifting of temporal position of the positional bits within the successive bytes). The servo pattern in any one servo byte is composed of four positional bits P1, P2, P3 and P4, which are demodulated to be detected, and a clock bit CB which separates the positional bits. When electromagnetic noise as shown in Fig. 2 is superposed on a positional bit within the range of half-width 1/2(T_{W50}), of the noise, detection of a correct peak level of the positional bit becomes difficult, due to enhancement or displacement of the amplitude of the positional bit signal by the noise signal. To avoid detection of positional bit signals being disturbed by noise signals, servo data is previously written on the servo disk as follows, so as not to be synchronised with the noise. That is, positional bits are shifted successively by a definite time, T_{SFT}, more than 20 ns, from one servo byte to another. This is illustrated by arrows depicted on the positional bits in Fig. 3. In Fig. 3, the positional bit P1 is effectively composed of four positional bits P1-1, P1-2, P1-3 and P1-4 shifted one relative to another, in successive bytes. The positional bits P2, P3 and P4 are effectively composed of P2-1, P2-2, P2-3 and P2-4, P3-1, P3-2, P3-3 and P3-4 and P4-1, P4-2, P4-3 and P4-4, respectively. The positional bits P1-2, P1-3 and P1-4 are shifted by times T_{SFT}, 2T_{SFT} and 3T_{SFT} from the positional bit P1-1, respectively. The positional bits P2-2, P2-3 and P2-4, the positional bits P3-2, P3-3 and P3-4 and the positional bits P4-2, P4-3 and P4-4 are similarly shifted from the positional bits P2-1, P3-1 and P4-1, respectively. The positional bits P1-1, P2-1, P3-1 and P4-1, the positional bits P1-2, P2-2, P3-2 and P4-2, the positional bits P1-3, P2-3, P3-3 and P4-3 and the positional bits P1-4, P2-4, P3-4 and P4-4 occur in a first servo byte, a second servo byte, a third servo byte and a fourth servo byte, respectively. As described above, the positional signals are written on the servo disk with selected shifts of timing of the positional signals from one servo byte to another.

When a servo disk with such successively shifted positional signals is used, electromagnetic noise is not superposed on the corresponding positional bits in the three remaining servo bytes, even when the noise is accidentally superposed on the four positional bits in one of the four servo bytes seen in Fig. 3.

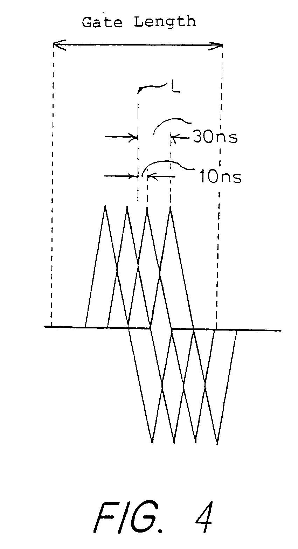

In practice, positional bits are shifted in timing symmetrically with respect to a regular or reference positional bit position, L, as shown in Fig. 4. Fig. 4 illustrates the symmetric shift of a positional bit in this embodiment of the present invention. Taking the positional bit P1 in Fig. 3 as an example, P1-1, P1-2, P1-3 and P1-4 are shifted -30 ns, -10 ns, +10 ns and +30 ns from the regular position L, respectively. In Fig. 4, the limit of tolerance of a gate length (or gate time) for demodulation of a positional bit is indicated by the dotted lines. For demodulation of a positional bit, detection of the peak level of the bit is performed by detecting only the positive side or upper side peak level. The gate length is taken as 160 ns, which is ± 80 ns with respect to L, in this embodiment. Accordingly, the largest shift of a positional bit from L cannot exceed 80 ns.

When servo data is read out from a servo disk on which shifted positional bits as described above have been written, the level of electromagnetic noise superposed on demodulated positional bits can be reduced to less than one-fourth of the level occurring when the positional bits are not shifted as in a conventional case.

Next, the production of shifted positional bit signals, for writing servo data on a servo disk, will be described.

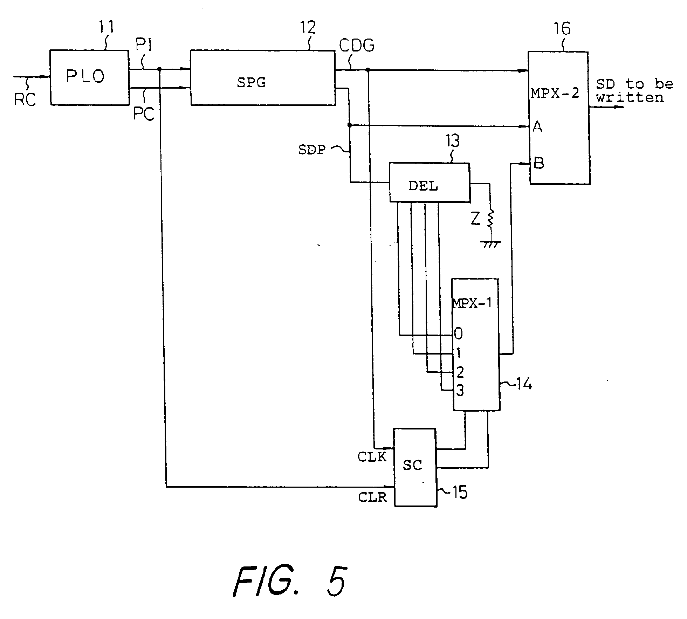

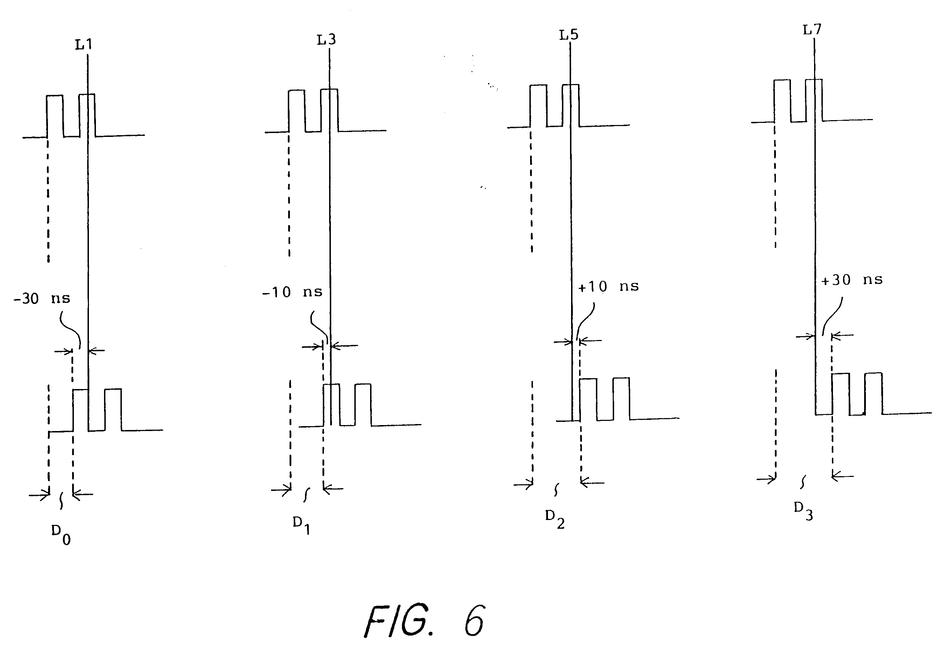

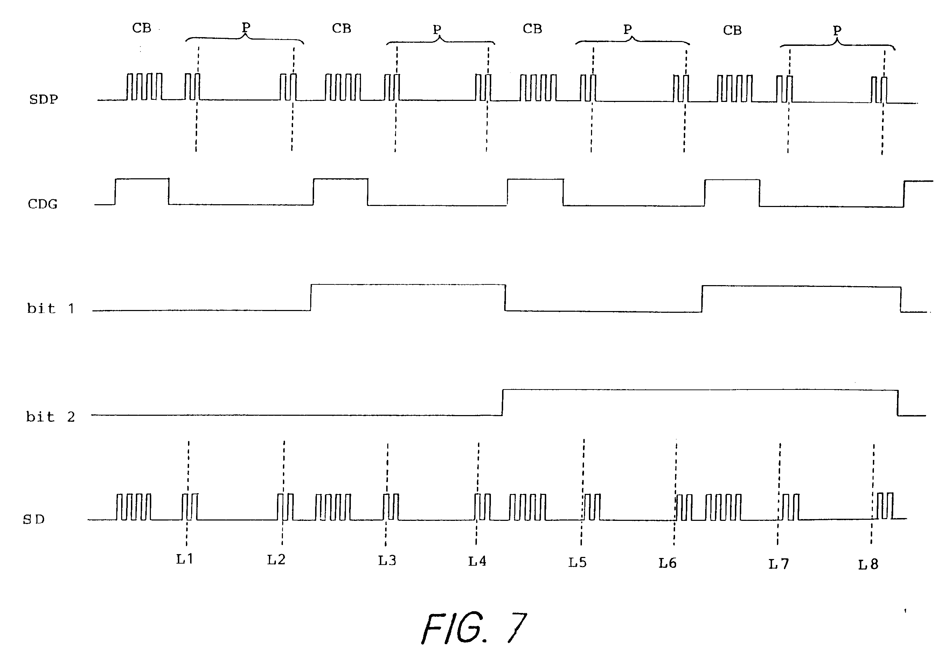

Fig. 5 is a block diagram of circuitry for generating servo data to be written. In Fig. 5, a reference clock (RC) signal, which is a standard clock for motion along the circumference of the disk previously written on the data disks, is input to a phase locked oscillator (PLO) 11. The phase locked oscillator 11 generates a preindex (PI) signal which is a standard clock of higher grade for motion along the circumference of the servo disk and a pattern clock (PC) signal synchronised with the reference clock signal. The PC signal is input to a servo pattern generator (SPG) 12 and the preindex signal is input to the servo pattern generator 12 and to a CLR terminal of a shift counter (SC) 15. On the basis of PI and PC signals, the SPG 12 generates a clock data gate (CDG) pulse and an original servo data pattern (SDP) to be written. The CDG pulse is a bit signal, 0 or 1, and separates the clock bit (CB) and the positional bits (P). The SDP is the original data pattern to be written, as required for data head positioning. The CDG pulse is input to a second multiplexer (MPX-2) 16 and the CLK terminal of the shift counter 15. The SDP signal is input to the MPX-2 16 and a delay circuit (DEL) 13. A terminator is denoted by Z. In the delay circuit 13, delay time can be changed by taps, for providing the shifted positional bits. Four different delay times are illustrated in Fig. 6, where servo pattern is expressed by pulses indicating timings of flux reversals. In Fig. 6, delay times D₀, D₁, D₂ and D₃ and shifts of a positional bit from L, in first, second, third and fourth servo bytes, are shown schematically. The shift time of a positional bit is the time difference between the regular position, L, and the onset of the positional bit signal concerned. In Fig. 5, the delayed bit signals corresponding to D₀, D₁, D₂ and D₃ are output from the delay circuit 13 and are input to 0, 1, 2 and 3 input terminals of a first multiplexer 14, respectively. The shift counter 15 counts the CDG pulse output from the servo pattern generator 12 and outputs bit 1 and bit 2 signals, which are shown in Fig. 7. The bit 1 and bit 2 signals are input to the first multiplexer 14, where a delay time is selected from D₀, D₁, D₂ and D₃. The timing of the shift for all adjacent servo tracks is set to the same time in the shift counter 15 by the preindex PI output from the phase locked oscillator 11. The four delayed bit signals D₀, D₁, D₂ and D₃ are input to the second multiplexer 16 from the first multiplexer 14. When the CDG pulse is 1, the SDP is input to the terminal A of the second multiplexer 16. When the CDG pulse is 0, the SDP is input to the terminal B of the second multiplexer 16, through the delay circuit 13 and the first multiplexer 14. Thus, servo data composed of the clock bit signals and shifted positional bit signals is output from the second multiplexer 16 to a circuit for writing servo data (not depicted).

Fig. 7 shows a time chart of bit signals occurring in the circuitry of Figs. 5 for generating servo data to be written. The chart covers four servo bytes, from the left to the right in Fig. 7. In Fig. 7, the original servo data pattern to be written (SDP) and the servo data to be written (SD) are expressed by pulses indicating the timings of flux reversals. In the time chart, SDP shows the timing of the original servo data pattern generated from the servo pattern generator 12. CB and P represent clock bits and positional bits, respectively. The dotted lines L1, L2, L3, L4, L5, L6, L7 and L8 drawn vertically represent regular positions (c.f. L) of the positional bits. The dotted lines L1 and L2, L3 and L4, L5 and L6 and L7 and L8 are in first, second, third and fourth servo bytes, respectively. CDG shows the timing of the clock data gate pulse generated from the servo pattern generator 12. Bit 1 and bit 2 show the timings of bit 1 and bit 2 signals generated from the shift counter 15. The shifts of the shifted positional bits in the first, second, third and fourth servo bytes correspond to bit (bit 1 and bit 2) signals 00, 01, 10 and 11, respectively. The servo data (SD) to be written output from the multiplexer 16, shows the current pattern flowing in a servo head when servo data is written on a servo disk. Servo data SD of four servo bytes is written periodically (repeatedly) along a servo track.

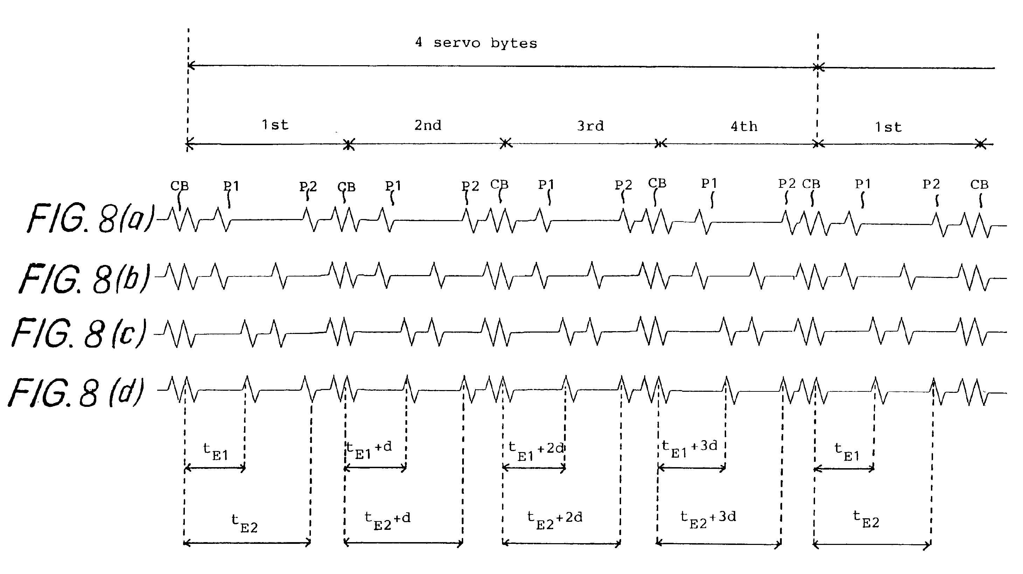

Figs. 8(a) to 8(b) provide a schematic time chart of waveforms of five servo bytes successively produced when a servo head reads servo data stored on a servo disk written using the output from MPX-2 16 shown in Fig. 5. Fig. 8(a) is the time chart of a waveform corresponding to SD in Fig. 7. The positional bit signals, P1 and P2, in Fig. 8(a) correspond to ODD1 and EVEN2, respectively. The positional bit signals in Figs. 8(b), 8(c) and 8(d) correspond ODD1 and ODD2, EVEN1 and ODD2 and EVEN1 and EVEN2, respectively. Taking Fig. 8(d) as an example, when the timing of EVEN 1 in the first servo byte is assumed to be t_{E1}, the timings of EVEN1 in the second, the third, the fourth and the fifth servo byte are t_{E1} + d, t_{E1} + 2d, t_{E1} + 3d and t_{E1}, respectively. Here, d is the time difference between the corresponding positional bit signals in two adjacent servo bytes. That is, the timing of EVEN 1 in the four servo bytes shifts in accordance with an arithmetic progression whose initial term is t_{E1} and whose common difference is d. The next four bytes repeat the previous four bytes, periodically. In the same way, the timings of EVEN2 in the first, the second, the third, the fourth and the fifth servo bytes are t_{E2}, t_{E2} + d, t_{E2} + 2d, t_{E2} + 3d and t_{E2}, respectively. The servo data corresponding to the time chart in Figs. 8(a) to 8(b) is stored on a servo disk. When the servo data is read by a servo head, positioning of a data head is carried out.

In the above-described embodiments of the present invention, four shift steps for positional bits are provided, as an example. However, the number of shift steps need not necessarily be four, so long as d is larger than (1/2) T_{W50} and d times the number of shift steps (in a cycle of shifting) is smaller than the gate length of the gate pulse with which positional bits are demodulated.

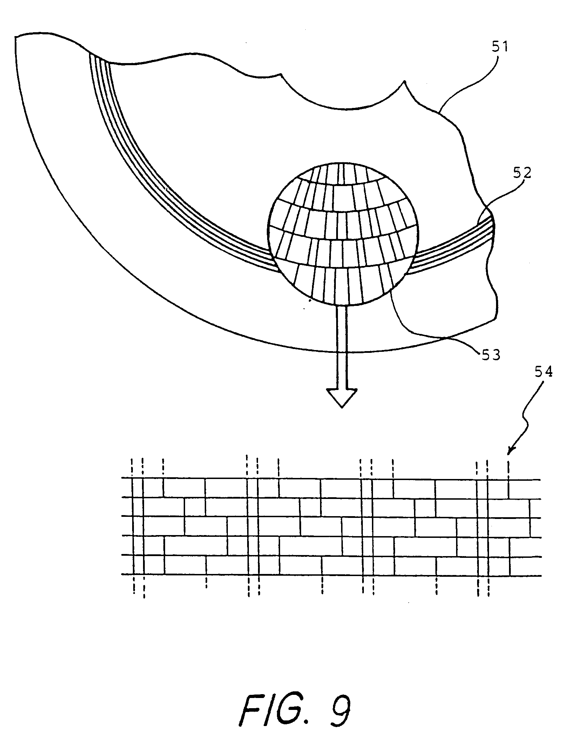

Fig. 9 schematically illustrates servo tracks on a servo disk, which is a magnetic recording medium. The upper of Fig. 9 shows a part of the servo disk 51, on which many servo tracks 52 are provided, running in directions following the circumference of the servo disk. Servo data is stored in the form of magnetic flux reversals in the magnetic medium of the disk along the servo tracks. A pattern 54, corresponding to the pattern shown in Figs. 8(a) to 8(d), can be seen through a microscope 53, as illustrated in the lower part of Fig. 9. In the pattern 54, the horizontal direction (left to right) and vertical direction (top to bottom) correspond to circumferential and radial directions on the servo disk, respectively. Each vertical line in the lower part of Fig. 9 represents the position of a magnetic flux reversal in the magnetic medium on a servo track, schematically.

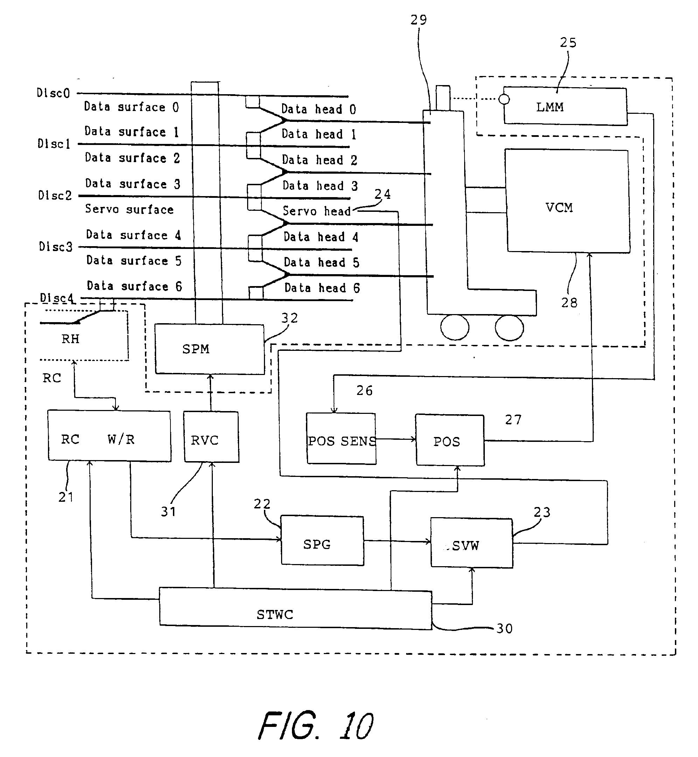

In Fig. 10, an apparatus embodying the present invention, for writing servo data on a servo disk in or of otherwise conventional magnetic disk apparatus, is illustrated in a schematic block diagram. In Fig. 10, circuits and components in an area surrounded by a broken line constitute the apparatus for writing servo data on the servo disk. The other circuits and components belong to the conventional magnetic disk apparatus. The magnetic disk apparatus has five magnetic disks, as an example, being disks 0, 1, 2, 3 and 4, which can be rotated by a spindle motor (SPM) 32, whose rate of revolution is controlled by a circuit (RVC) 31 for controlling the rate of revolution, driven by a circuit (STWC) 30 for controlling the apparatus for writing servo data. Seven surfaces of the five magnetic disks are used as data surfaces and one surface is used as a servo surface. Servo data is written on the servo surface by a servo head 24. A reference clock obtained by a reference head (RH) from a rear surface of disk 4 is input to circuit (SPG) 22 for generating servo pattern data as shown in Fig. 5, through a circuit (RC W/R) 21 for writing and reading the reference clock. The servo data pattern to be written, output from the circuit 22 for generating servo pattern data as shown in Fig. 5, is input to a circuit (SVW) 23 for writing the servo data. Amplified write signals drive the servo head 24 and the servo pattern data is written on the servo surface of the servo disk (disk 2) indicated in Fig. 10. At this stage, positioning of the servo head 24 is performed by a head positioner 29 driven by a voice coil motor (VCM) 28, through a circuit (POS SENS) 26, for detecting position, and a circuit (POS) 27 for positioning using a length measuring machine 25 with a laser.

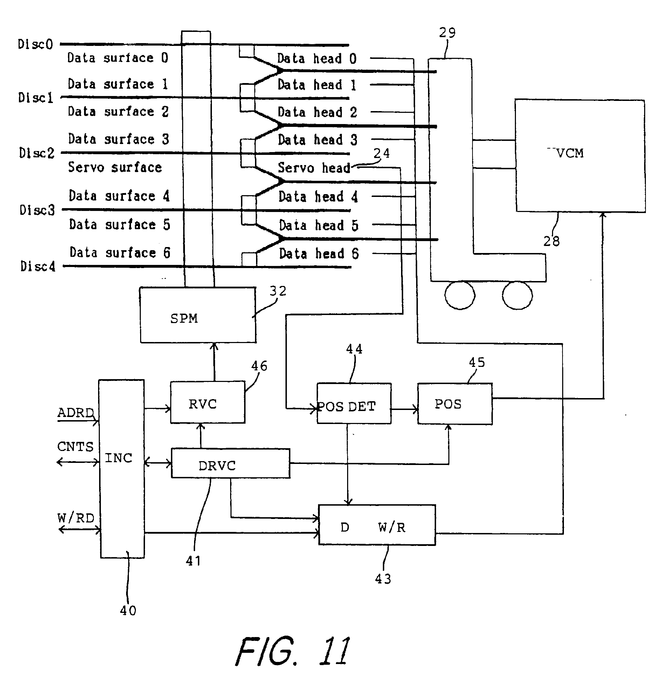

In Fig. 11, a block diagram of a magnetic disk apparatus which is exhibited partly in Fig. 10 is shown schematically. In Fig. 11, the same reference numbers as appear in Fig. 10 designate the same components as in Fig. 10. This magnetic disk apparatus is essentially a conventional apparatus, except for the servo disk, on which servo data has been written by the apparatus described in Fig. 10. In the same way as in Fig. 10, the magnetic disk can be rotated by a spindle motor 32 driven by a circuit (DRVC) 41, for controlling the apparatus, through a circuit (RVC) 46 for controlling the rate of revolution. An interface circuit (INC) 40 receives write or read data (W/R D), control signals (CNTS) and address data (ADRD) from a controller, which is not depicted. The data is written on the data surfaces of the data disks and the data stored on data surfaces of the data disks is read by a data head, through a circuit (D W/R) 43 for writing and reading data. The servo signals produced when the servo data is read by a servo head 24 are demodulated by a circuit (POS DEM) 44 for demodulating the positional bit signals and input to a circuit 45 for positioning the data head. The output of the circuit (POS) 45, for positioning, drives a head positioner 29 by a voice coil motor 28, to position the data head on a designated track on a data surface.

In accordance with an embodiment of the present invention, servo data to be stored on a servo disk in a magnetic recording apparatus, for use in positioning a data head of the magnetic recording apparatus on a data disk of the magnetic recording apparatus, is formed in a train of four servo bytes arranged in accordance with four clock bits successively received, each servo byte having a clock bit and a group of positional bits. The positional bits are set with definite timing differences from the clock bits. The four definite timing differences of corresponding positional bits in the four servo bytes conform to an arithmetic progression, in which the initial term of the progression is the definite timing difference of a positional bit in the first servo byte and the common difference of the progression is the time difference between two corresponding positional bits in two adjacent servo bytes. The time difference and a length of a gate pulse in which servo data signals are demodulated, are set for example, to 20 ns and 160 ns, respectively.

An embodiment of the present invention provides a method of writing servo data on a servo data recording medium of magnetic data recording means in accordance with a train of clock bits, said servo data including a clock bit, being one of the clock bits, and positional bit signals for positioning data writing head means, which is for writing data to data recording medium of the magnetic data recording means, of the magnetic data recording means by detecting amplitude variations of the positional bit signals, said method comprising the steps of:-
generating a definite number of servo bytes, arranged in accordance with the train of clock bits, consisting of a standard servo byte and a plurality of succeeding servo bytes followed after said standard servo byte, said standard servo byte including a standard clock bit being one of the clock bits arranged in the train, and a plurality of standard positional bit signals set in said standard servo byte by making a standard time space from said standard clock bit, and one of said succeeding servo bytes including another clock bit, being another of the clock bits arranged in the train, and another group of positional bit signals set in said one of said succeeding servo bytes by making a definite time space, which consists of said standard time space and a definite delay time, from said other clock bit; and
applying said definite number of servo bytes to the servo data recording medium as the servo data.

Said definite delay time is preferably at least a half-width of electromagnetic noise which would appear when the servo data are read from the servo data recording medium and the largest definite delay time is smaller than a length of a gate pulse in which said servo data are demodulated; and
said definite number of servo bytes is preferably at most a numerical value obtained by dividing said gate length by said smallest definite delay time.

An embodiment of the present invention provides a method for writing servo data to a servo disk of a magnetic recording apparatus in accordance with clock bits used in the magnetic recording apparatus and arranged successively in a train, said servo data including a clock bit being one of the clock bits and positional bit signals being for positioning a data head, which is for writing data to data disks of the magnetic recording apparatus, of the magnetic recording apparatus by detecting amplitude variations of the positional bit signals, said method comprising the steps of:-
generating a standard servo byte including a standard clock bit obtained by designating one of the clock bits and a plurality of standard positional bit signals set in said standard servo byte by making a standard time space from said standard clock bit;
generating a definite number of succeeding servo bytes followed after said standard servo byte, each of said succeeding servo byte including a clock bit for designating a clock time for each of said succeeding servo bytes and a plurality of positional bit signals so as to correspond to said standard positional bits respectively;
delaying said positional bits in said succeeding servo bytes so that the time of the corresponding positional bit forms an arithmetic progression whose initial term is said standard time space of the positional bit in the standard servo byte and common difference is the smallest definite time of delay, in the order of said succeeding servo bytes;
counting said servo bytes generated successively for assigning a number to said servo bytes;
distributing said delayed positional bits to said corresponding servo byte with designated number; and
generating periodically said servo bytes group consisting of said standard byte and said definite number of succeeding servo bytes.

Said definite delay time is preferably at least a half-width of electromagnetic noise which would appear when the servo data are read from the servo data recording medium and the largest definite delay time is smaller than a length of a gate pulse in which said servo data are demodulated; and
said definite number of servo bytes is at most a numerical value obtained by dividing said length of a gate pulse by said smallest definite delay time.

An embodiment of the present invention provides a servo data recording medium storing data having a plurality of servo bytes, each servo byte including a clock bit and a plurality of positional bit signals used for positioning data writing head means, which is for writing data to data recording media of the magnetic data recording means, of the magnetic data recording means by detecting amplitude variation of the positional bit signals, said servo data recording medium comprising:-
a periodical data pattern having a periodically repeated servo byte group consisting of a standard servo byte and a plurality of succeeding servo bytes followed after said standard servo byte;
a data pattern in said each servo byte group so that said standard servo byte includes a standard clock bit data and a plurality of standard positional data set in said standard servo byte by making a standard time space from said standard clock bit data and one of said succeeding servo bytes includes another clock bit data and a plurality of another positional data set in said one of said succeeding servo bytes by making a definite time space, which consists of said standard time space and a definite delay time from said other clock bit data; and
a data pattern said definite time space forms an arithmetic progression, in which the initial term is said standard time space of the positional bit in the standard servo byte and the common difference is the smallest definite time of delay, in the order of said succeeding servo bytes.

Said definite delay time is preferably at least a half-width of electromagnetic noise which would appear when the servo data are read from the servo data recording medium and the largest definite delay time is smaller than a length of a gate pulse in which said servo data are demodulated; and
said definite number of servo bytes is preferably at most a numerical value obtained by dividing said length of said gate pulse by said smallest definite delay time.

An embodiment of the present invention provides an apparatus for writing servo data having a plurality of servo bytes, each servo byte including a clock bit and a plurality of positional bit signals on a servo disk provided in a magnetic disk apparatus having a data head, which writes or reads data in a track of a data disk, being positioned so as to be on the track of a data disk, said positioning is performed by a head positioner reading said servo data in said servo track of said servo disk by a servo head, said apparatus for writing servo data comprising:-
means for generating a standard servo byte including a standard clock bit and a plurality of standard positional bit signals set in said standard servo byte by making a standard time space from said standard clock bit and a definite number of succeeding servo bytes followed after said standard servo byte, each of said succeeding servo bytes including a clock bit for designating a clock time for each of said succeeding servo bytes and a plurality of positional bits so as to correspond to said standard positional bits respectively;
means for delaying said positional bit in said succeeding servo bytes so that the time of the corresponding positional bit makes an arithmetic progression, in which the initial term is said standard time space of the positional bit in the standard servo byte and the common difference is the smallest definite time of delay, in the order of said succeeding servo bytes;
means for counting said servo bytes generated successively for assigning a number to said servo bytes;
means for distributing said delayed positional bits to said corresponding servo byte with designated number; and
means for generating periodically said servo byte group consisting of said standard servo byte and said succeeding servo byte.

Said definite delay time is preferably at least a half-width of electromagnetic noise which would appear when the servo data are read from the servo data recording medium and the largest definite delay time is smaller than a length of a gate pulse in which said servo data are demodulated; and
said definite number of servo bytes is preferably at most a numerical value obtained by dividing said gate length by said smallest definite delay time.

Said definite delay time is twenty nanosecond, for example.

Said number of said servo byte in said servo byte group may be four, for example.

An embodiment of the present invention provides a magnetic recording apparatus for writing data on a track of a data disk and reading data from said track of the data disk by a data head being positioned on said track of said data disk, said positioning is performed by a head positioner reading the servo data having a plurality of servo bytes, each servo byte including a clock bit and a plurality of positional bit signals on a servo track by a servo head, said servo data is previously written on the servo disk, said magnetic recording apparatus comprising:-
a servo disk storing servo data including,
a periodical data pattern having a periodically repeated servo byte group consisting of a standard servo byte and a plurality of succeeding servo bytes followed after said standard servo byte;
data pattern in said servo byte group so that said standard servo byte include a standard clock bit data and a plurality of standard positional data set in said standard servo byte by making a standard time space from said standard clock bit data and one of said succeeding servo bytes include another clock bit data and a plurality of another positional data set in said one of said succeeding servo bytes by making a definite time space, which consists of said standard time space and a definite delay time from said other clock bit data, and
data pattern said definite time space forms an arithmetic progression, in which the initial term is said standard time space of the positional bit in the standard servo byte and the common difference is the smallest definite time of delay, in the order of said succeeding servo bytes.

Said definite delay time is at least a half-width of electromagnetic noise which would appear when the servo data are read from the servo data recording medium and the largest definite delay time is smaller than a length of a gate pulse in which said servo data are demodulated; and
said definite number of servo bytes is at most a numerical value obtained by dividing said length of said gate pulse by said smallest definite delay time.

## Claims

1. A method of writing servo data (SD) on a servo data recording medium of a magnetic data recording means, the servo data including servo bytes each comprising a clock bit (CB) and positional bits (P1, P2, P3, P4) at regular temporal dispositions in the byte which are spaced from the clock bit (CB), the positional bits (P1, P2, P3, P4) serving for use in positioning a magnetic head on a data recording medium of the magnetic data recording means, the method comprising:-
generating a succession of servo bytes, and applying those servo bytes to the servo data recording medium, as the servo data (SD);
characterised in that:-
the temporal dispositions (P1-1, P1-2, P1-3, P1-4, etc.) of the positional bits (P1, etc.) in successive bytes of the succession, with regard to the respective clock bits (CB) in the bytes, are displaced from said regular disposition by a small fraction of the length of one servo byte, from servo byte to servo byte of the succession, being located on one and the same servo track, and the relative temporal dispositions (P1-1, P1-2, P1-3, P1-4, etc.) of the positional bits (P1, etc.) in the servo bytes of the succession all fall within the width of a gate pulse, which width defines a range over which positional bits (P1, etc.) can be detected to serve for use in servo data (SD) demodulating means (44).

2. A method as claimed in claim 1, wherein the relative temporal dispositions (P1-1, P1-2, P1-3, P1-4, etc.) of the positional bits (P1, etc.), in successive bytes of the succession, with regard to the respective clock bits (CB) in the bytes, conform to an arithmetic progression, the displacement (T_{SFT}) of the positional bits from one servo byte of the succession to the next representing the common difference term of the progression.

3. A method as claimed in claim 1 or 2, wherein the succession is generated cyclically repeatedly.

4. A method as claimed in claim 1, 2 or 3, wherein the displacement of the positional bits (P1, etc.), from one servo byte of the succession to the next, is at least equal to the half-width (Tw50/2) of electromagnetic noise which may appear on a servo data (SD) waveform read from the servo data recording medium, said electromagnetic noise being synchronous with servo data (SD), caused by data write operations in relation to a data recording head adjacent to a servo data reading head, and having a similar waveform to the servo data waveform.

5. A method as claimed in claim 1, 2, 3 or -4, wherein the number of bytes in the succession is four.

6. A method as claimed in any preceding claim, wherein the displacement of the positional bits (P1, etc.), from one servo byte of the succession to the next, is 20 nanoseconds.

7. Apparatus for writing servo data (SD) on a servo data recording medium of a magnetic data recording means, the servo data (SD) including servo bytes each comprising a clock bit (CB) and positional bits (P1, P2, P3, P4) at regular temporal dispositions in the byte which are spaced from the clock bit (CB), the positional bits serving for use by a head positioner (29) in positioning a magnetic head on a data recording medium of the magnetic data recording means, the apparatus comprising:-
means (11 to 16) for generating a succession of servo bytes, and applying those servo bytes to the servo data recording medium, as the servo data (SD);
characterised in that:-
the said means (11 to 16) are so operable that the temporal dispositions (P1-1, P1-2, P1-3, P1-4, etc.) of the positional bits (P1, etc.) in successive bytes of the succession, with regard to the respective clock bits (CB) in the bytes, are displaced from said regular disposition by a small fraction of the length of one servo byte, from servo byte to servo byte of the succession, being located on one and the same servo track, and the relative temporal dispositions (P1-1, P1-2, P1-3, P1-4, etc.) of the positional bits (P1, etc.) in the servo bytes of the succession all fall within the width of a gate pulse, which width defines a range over which positional bits can be detected to serve for use in servo data (SD) demodulating means (44).

8. Apparatus as claimed in claim 7, wherein the said means (11 to 16) are so operable that the relative temporal dispositions (P1-1, P1-2, P1-3, P1-4, etc.) of the positional bits (P1, etc.), in successive bytes of the succession, with regard to the respective clock bits in the bytes, conform to an arithmetic progression, the displacement (T_{SFT}) of the positional bits from one servo byte of the succession to the next representing the common difference term of the progression.

9. Apparatus as claimed in claim 7 or 8, wherein the said means generate the succession cyclically repeatedly.

10. Apparatus as claimed in claim 7, 8 or 9, wherein said means (11 to 16) are so operable that the displacement of the positional bits (P1, etc.), from one servo byte of the succession to the next, is at least equal to the half-width (Tw50/2) of electromagnetic noise which may appear on a servo data (SD) waveform read from the servo data recording medium, said electromagnetic noise being synchronous with servo data (SD), caused by data write operations in relation to data recording head adjacent to a servo data reading head, and having a similar waveform to the servo data waveform.

11. Apparatus as claimed in claim 7, 8, 9 or 10, wherein the number of bytes in the succession is four.

12. Apparatus as claimed in claim 7, 8, 9, 10 or 11, wherein the displacement of the positional bits, from one servo byte of the succession to the next, is 20 nanoseconds.

13. Apparatus as claimed in claim 7, 8, 9, 10, 11 or 12, wherein the magnetic data recording means is a magnetic disk device, and the servo data recording medium is a servo disk of the device.

14. Magnetic disk recording apparatus, comprising a data head for writing data on a track of a data disk of the apparatus, and a servo head (24) for reading servo data (SD) on a servo track of a servo disk of the apparatus, a head positioner (29) for positioning the data head on the track of the data disk in dependence upon the servo data (SD) read by the servo head (24), the servo data (SD) including servo bytes each comprising a clock bit (CB) and positional bits (P1, P2, P3, P4) at regular temporal dispositions in the byte which are spaced from the clock bit (CB);
characterised in that:-
the servo bytes form a succession in which the temporal dispositions (P1-1, P1-2, P1-3, P1-4, etc.) of the positional bits (P1, etc.) in successive bytes of succession, with regard to the respective clock bits (CB) in the bytes, are displaced from said regular disposition by a small fraction of the length of one servo byte, from servo byte to servo byte of the succession, being located on one and the same servo track, and the relative temporal dispositions (P1-1, P1-2, P1-3, P1-4, etc.) of the positional bits (P1, etc, ) in the servo bytes of the succession all fall within the width of a gate pulse, which width defines a range over which positional bits (P1, etc.) can be detected to serve for use in servo data (SD) demodulating means (44).

15. Apparatus as claimed in claim 14, wherein the relative temporal dispositions (P1-1, P1-2, P1-3, P1-4, etc.) of the positional bits (P1, etc), in successive bytes of the succession, with regard to the respective clock bits (CB) in the bytes, conform to an arithmetic progression, the displacement (T_{SFT}) of the positional bits from one servo byte of the succession to the next representing the common difference term of the progression.

16. Apparatus as claimed in claim 14 or 15, wherein the succession is cyclically repeated in the servo data.

17. Apparatus as claim in claim 14, 15 or 16, wherein the displacement of the positional bits, from one servo byte of the succession to the next, is at least equal to the half-width (Tw50/2) of electromagnetic noise which may appear on a servo data (SD) waveform read from the servo data recording medium, said electromagnetic noise being synchronous with servo data (SD), caused by data write operations in relation to a data recording head adjacent to a servo data reading head, and having a similar waveform to the servo data waveform.

18. Apparatus as claimed in claim 14, 15, 16 or 17, wherein the number of bytes in the succession is four.

19. Apparatus as claimed in claim 14, 15, 16, 17 or 18, wherein the displacement of the positional bits (P1, etc.), from one servo byte of the succession to the next, is 20 nanoseconds.

## Patentansprüche

1. Ein Verfahren zum Schreiben von Servodaten (SD) auf ein Servodatenaufnahmemedium eines magnetischen Datenaufnahmemittels, wobei die Servodaten Servobytes enthalten, die jeweils ein Taktbit (CB) und Positionsbits (P1, P2, P3, P4) in regulären zeitlichen Anordnungen in dem Byte umfassen, die von dem Taktbit (CB) beabstandet sind, wobei die Positionsbits (P1, P2, P3, P4) für die Verwendung der Positionierung eines magnetischen Kopfes auf einem Datenaufnahmemedium des magnetischen Datenaufnahmemittels dienen, welches Verfahren umfaßt:
Erzeugen einer Folge von Servobytes und Aufbringen dieser Servobytes als Servodaten (SD) auf das Servodatenaufnahmemedium;
dadurch gekennzeichnet, daß
die zeitlichen Anordnungen (P1-1, P1-2, P1-3, P1-4, etc.) der Positionsbits (P1, etc.) in aufeinanderfolgenden Bytes der Folge bezüglich den jeweiligen Taktbits (CB) in den Bytes von der genannten regulären Anordnung um einen kleinen Bruchteil der Länge eines Servobytes verschoben sind, von Servobyte zu Servobyte der Folge, die auf ein und der selben Servospur angeordnet sind, und die relativen zeitlichen Anordnungen (P1-1, P1-2, P1-3, P1-4, etc.) der Positionsbits (P1, etc.) in den Servobytes der Folge alle in die Breite eines Gatterpulses fallen, dessen Breite einen Bereich definiert, über den Positionsbits (P1, etc.) detektiert werden können, damit sie für die Verwendung in einem Servodaten (SD)-Demodulationsmittel (44) dienen.

2. Ein Verfahren nach Anspruch 1, worin die relativen zeitlichen Anordnungen (P1-1, P1-2, P1-3, P1-4, etc.) der Positionsbits (P1, etc.) in aufeinanderfolgenden Bytes der Folge bezüglich den jeweiligen Taktbits (CB) in den Bytes mit einer arithmetischen Progression konform sind, wobei die Verschiebung (T_{SFT}) der Positionsbits von einem Servobyte der Folge zu dem nächsten den gemeinsamen Differenzausdruck der Progression darstellt.

3. Ein Verfahren nach Anspruch 1 oder 2, worin die Folge sich zyklisch wiederholend erzeugt wird.

4. Ein Verfahren nach Anspruch 1, 2 oder 3, worin die Verschiebung der Positionsbits (P1, etc.) von einem Servobyte der Folge zu dem nächsten wenigstens gleich der Halbwertsbreite (Tw50/2) des elektromagnetischen Rauschens ist, das auf einer Servodaten (SD)-Wellenform erscheinen kann, die von dem Servodatenaufnahmemedium ausgelesen wird, wobei das genannte elektromagnetische Rauschen synchron mit den Servodaten (SD) ist, bedingt durch Datenschreibvorgänge in Verbindung mit einem Datenaufnahmekopf, der sich benachbart zu einem Servodatenlesekopf befindet, und eine Wellenform aufweist, die der Servodatenwellenform ähnlich ist.

5. Ein Verfahren nach einem der Ansprüche 1, 2, 3 oder 4, worin die Anzahl der Bytes in der Folge vier ist.

6. Ein Verfahren nach einem der vorigen Ansprüche, wobei die Verschiebung der Positionsbits (P1, etc.) von einem Servobyte der Folge zu dem nächsten 20 ns beträgt.

7. Vorrichtung zum Schreiben von Servodaten (SD) auf ein Servodatenaufnahmemedium eines magnetischen Datenaufnahmemittels, wobei die Servodaten (SD) Servobytes enthalten, die jeweils ein Taktbit (CB) und Positionsbits (P1, P2, P3, P4) in regulären zeitlichen Anordnungen in dem Byte umfassen, die von dem Taktbit (CB)beabstandet sind, wobei die Positionsbits für die Verwendung durch einen Kopfpositionierer (29) dienen, zur Positionierung eines magnetischen Kopfes auf einem Datenaufnahmemedium des magnetischen Datenaufnahmemittels, wobei die Vorrichtung umfaßt:
Mittel (11 bis 16) zum Erzeugen einer Folge von Servobytes, und zum Aufbringen dieser Servobytes als Servodaten (SD) auf das Servodatenaufnahmemedium;
dadurch gekennzeichnet, daß
die genannten Mittel (11 bis 16) so betrieben werden können, daß die zeitlichen Anordnungen (P1-1, P1-2, P1-3, P1-4, etc.) der Positionsbits (P1, etc.) in aufeinanderfolgenden Bytes der Folge bezüglich den jeweiligen Taktbits (CB) in den Bytes von der genannten regulären Anordnung einen kleinen Bruchteil der Länge eines Servobytes verschoben sind, von Servobyte zu Servobyte der Folge, die auf ein und der gleichen Servospur angeordnet sind, und die relativen zeitlichen Anordnungen (P1-1, P1-2, P1-3, P1-4, etc.) der Positionsbits (P1, etc.) in den Servobytes der Folge alle in die Breite eines Gatterpulses fallen, dessen Breite einen Bereich definiert, über den Positionsbits detektiert werden können, damit sie für die Verwendung in einem Servodaten (SD) -Demodulationsmittel (44) dienen.

8. Vorrichtung nach Anspruch 7, worin die genannten Mittel (11 bis 16) derartig betrieben werden können, daß die relativen zeitlichen Anordnungen (P1-1, P1-2, P1-3, P1-4, etc.) der Positionsbits (P1, etc.) in aufeinanderfolgenden Bytes der Folge bezüglich den jeweiligen Taktbits in den Bytes mit einer arithmetischen Progression konform sind, wobei die Verschiebung (T_{SFT}) der Positionsbits von einem Servobyte der Folge zu dem nächsten den gemeinsamen Differenzausdruck der Progression darstellt.

9. Vorrichtung nach Anspruch 7 oder 8, worin die genannten Mittel die Folge zyklisch wiederholt erzeugen.

10. Vorrichtung nach Anspruch 7, 8 oder 9, wobei die genannten Mittel (11 bis 16) derartig betrieben werden können, daß die Verschiebung der Positionsbits (P1, etc.) von einem Servobyte der Folge zu dem nächsten wenigstens gleich der Halbwertsbreite (Tw50/2) des elektromagnetischen Rauschens ist, das auf einer Servodaten (SD)-Wellenform erscheinen kann, die von dem Servodatenaufnahmemedium ausgelesen wird, wobei das genannte elektromagnetische Rauschen synchron mit Servodaten (SD) ist, bedingt durch Datenschreibvorgänge in Verbindung mit einem Datenaufnahmekopf, der sich benachbart zu einem Servodatenlesekopf befindet, und eine ähnliche Wellenform aufweist wie die Servodatenwellenform.

11. Vorrichtung nach einem der Ansprüche 7, 8, 9 oder 10, worin die Anzahl der Bytes in der Folge vier ist.

12. Vorrichtung nach einem der Ansprüche 7, 8, 9, 10 oder 11, worin die Verschiebung der Positionsbits von einem Servobyte der Folge zu dem nächsten 20 ns beträgt.

13. Vorrichtung nach einem der Ansprüche 7, 8, 9, 10, 11 oder 12, worin das magnetische Datenaufnahmemedium eine magnetische Platteneinrichtung ist und das Servodatenaufnahmemedium eine Servoplatte der Einrichtung ist.

14. Magnetische Plattenaufnahmevorrichtung, die einen Datenkopf zum Schreiben von Daten auf einer Spur eine Datenplatte der Vorrichtung umfaßt, und einen Servokopf (24) zum Lesen von Servodaten (SD) auf einer Servospur einer Servoplatte der Vorrichtung, einen Kopfpositionierer (29) zum Positionieren des Datenkopfes auf der Spur der Datenplatte in Abhängigkeit der Servodaten (SD), die von dem Servokopf (24) gelesen worden sind, wobei die Servodaten (SD) Servobytes enthalten, die jeweils ein Taktbit (CB) und Positionsbits (P1, P2, P3, P4) in regulären zeitlichen Anordnungen in dem Byte umfassen, die von dem Taktbit (CB) beabstandet sind;
dadurch gekennzeichnet, daß
die Servobytes eine Folge bilden, in der die zeitlichen Anordnungen (P1-1, P1-2, P1-3, P1-4, etc.) der Positionsbits (P1, etc.) in aufeinanderfolgenden Bytes der Folge bezüglich den jeweiligen Taktbits (CB) in den Bytes von der genannten regulären Anordnung einen kleinen Bruchteil der Länge eines Servobytes verschoben sind, von Servobyte zu Servobyte der Folge, die auf ein und der gleichen Servospur angeordnet sind, und die relativen zeitlichen Anordnungen (P1-1, P1-2, P1-3, P1-4, etc.) der Positionsbits (P1, etc.) in den Servobytes der Folge alle in die Breite eines Gatterpulses fallen, dessen Breite einen Bereich definiert, über den Positionsbits (P1, etc.) detektiert werden können, damit sie für die Verwendung in einem Servodaten (SD) -Demodulationsmitteln (44) zu dienen.

15. Vorrichtung nach Anspruch 14, worin die relativen zeitlichen Anordnungen (P1-1, P1-2, P1-3, P1-4, etc.) der Positionsbits (P1, etc.) in aufeinanderfolgenden Bytes der Folge bezüglich den jeweiligen Taktbits (CB) in den Bytes mit einer arithmetischen Progression konform sind, wobei die Verschiebung (T_{SFT}) der Positionsbits von einem Servobyte der Folge zu dem nächsten den gemeinsamen Differenzausdruck der Progression darstellen.

16. Vorrichtung nach Anspruch 14 oder 15, worin die Folge in den Servodaten zyklisch wiederholt wird.

17. Vorrichtung nach Anspruch 14, 15 oder 16, worin die Verschiebung der Positionsbits von einem Servobyte der Folge zu dem nächsten wenigstens gleich der Halbwertsbreite (Tw50/2) des elektromagnetischen Rauschens ist, das auf einer Servodaten (SD)-Wellenform erscheinen kann, die von dem Servodatenaufnahmemedium ausgelesen wird, wobei das genannte elektromagnetische Rauschen synchron mit den Servodaten (SD) ist, bedingt durch Datenschreibvorgänge in Verbindung mit einem Datenaufnahmekopf, der sich benachbart zu einem Servodatenlesekopf befindet, und eine Wellenform aufweist, die der Servodatenwellenform ähnlich ist.

18. Vorrichtung nach Anspruch 14, 15, 16, oder 17, worin die Anzahl der Bytes in der Folge vier ist.

19. Vorrichtung nach Anspruch 14, 15, 16, 17 oder 18, worin die Verschiebung der Positionsbits (P1, etc.) von einem Servobyte der Folge zu dem nächsten 20 ns beträgt.

## Revendications

1. Procédé d'écriture de données d'asservissement (SD) sur un support d'enregistrement de données d'asservissement d'un moyen d'enregistrement de données magnétique, les données d'asservissement incluant des octets d'asservissement dont chacun comprend un bit d'horloge (CB) et des bits de position (P1, P2, P3, P4) selon des dispositions temporelles régulières dans l'octet, lesquels sont espacés du bit d'horloge (CB), les bits de position (P1, P2, P3, P4) servant au positionnement d'une tête magnétique sur un support d'enregistrement de données du moyen d'enregistrement de données magnétique, le procédé comprenant :
la génération d'une succession d'octets d'asservissement et l'application de ces octets d'asservissement sur le support d'enregistrement de données d'asservissement en tant que données d'asservissement (SD),
caractérisé en ce que :
les dispositions temporelles (P1-1, P1-2, P1-3, P1-4, etc...) des bits de position (P1, etc...) dans des octets successifs de la succession, par rapport aux bits d'horloge respectifs (CB) contenus dans les octets, sont déplacées par rapport à ladite disposition régulière d'une faible fraction de la longueur d'un octet d'asservissement, d'un octet d'asservissement à un octet d'asservissement de la succession, qui sont situés sur la seule et même piste d'asservissement, et les dispositions temporelles relatives (P1-1, P1-2, P1-3, P1-4, etc...) des bits de position (P1, etc...) contenus dans les octets d'asservissement de la succession tombent tous dans la largeur d'une impulsion de porte, laquelle largueur définit une plage sur laquelle des bits de position (P1, etc...) peuvent être détectés pour être utilisés dans un moyen de démodulation (44) des données d'asservissement (SD).

2. Procédé selon la revendication 1, dans lequel les dispositions temporelles relatives (P1-1, P1-2, P1-3, P1-4, etc...) des bits de position (P1, etc...) dans des octets successifs de la succession, par rapport aux bits d'horloge respectifs (CB) contenus dans les octets, sont conformes à une progression arithmétique, le déplacement (TSFT) des bits de position d'un octet d'asservissement de la succession au suivant représentant le terme de différence commun de la progression.

3. Procédé selon la revendication 1 ou 2, dans lequel la succession est générée cycliquement de façon répétée.

4. Procédé selon la revendication 1, 2 ou 3, dans lequel le déplacement des bits de position (P1, etc...), d'un octet d'asservissement de la succession au suivant, est au moins égal à la demi-largeur (Tw50/2) du bruit électromagnétique qui peut apparaître sur une forme d'onde de données d'asservissement (SD) lues sur le support d'enregistrement de données d'asservissement, ledit bruit électromagnétique étant synchrone avec les données d'asservissement (SD), lequel est provoqué par des opérations d'écriture de données en relation avec une tête d'enregistrement de données adjacente à une tête de lecture de données d'asservissement et présente une forme d'onde similaire à la forme d'onde des données d'asservissement.

5. Procédé selon la revendication 1, 2, 3 ou 4, dans lequel le nombre d'octets de la succession est de 4.

6. Procédé selon l'une quelconque des revendications précédentes, dans lequel le déplacement des bits de position (P1, etc...), d'un octet d'asservissement de la succession au suivant, est de 20 nanosecondes.

7. Appareil permettant d'écrire des données d'asservissement (SD) sur un support d'enregistrement de données d'asservissement d'un moyen d'enregistrement de données magnétique, les données d'asservissement (SD) incluant des octets d'asservissement dont chacun comprend un bit d'horloge (CB) et des bits de position (P1, P2, P3, P4) en des dispositions temporelles régulières dans l'octet qui sont espacés du bit d'horloge (CB), les bits de position étant utilisés par un dispositif de positionnement de tête (29) lors du positionnement d'une tête magnétique sur un support d'enregistrement de données du moyen d'enregistrement de données magnétique, l'appareil comprenant :
un moyen (11 à 16) pour générer une succession d'octets d'asservissement et pour appliquer ces octets d'asservissement au support d'enregistrement de données d'asservissement en tant que données d'asservissement (SD),
caractérisé en ce que :
ledit moyen (11 à 16) fonctionne également de telle sorte que les dispositions temporelles (P1-1, P1-2, P1-3, P1-4, etc...) des bits de position (P1, etc...) dans des octets successifs de la succession, par rapport aux bits d'horloge respectifs (CB) contenus dans les octets, soient déplacées par rapport à ladite disposition régulière d'une faible fraction de la longueur d'un octet d'asservissement, depuis un octet d'asservissement à l'octet d'asservissement de la succession, lesquels sont situés sur la seule et même piste d'asservissement, et les dispositions temporelles relatives (P1-1, P1-2, P1-3, P1-4, etc...) des bits de position (P1, etc...) contenus dans les octets d'asservissement de la succession tombent toutes dans la largeur d'une impulsion de porte, laquelle largeur définit une plage sur laquelle des bits de position peuvent être détectés pour être utilisés dans un moyen de démodulation (44) de données d'asservissement (SD).

8. Appareil selon la revendication 7, dans lequel ledit moyen (11 à 16) peut fonctionner également de telle sorte que les dispositions temporelles relatives (P1-1, P1-2, P1-3, P1-4, etc...) des bits de position (P1, etc...), dans des octets successifs de la succession, par rapport aux bits d'horloge respectifs contenus dans les octets, soient conformes à une progression arithmétique, le déplacement (TSFT) des bits de position depuis un octet d'asservissement de la succession jusqu'au suivant représentant le terme de différence commun de la progression.

9. Appareil selon la revendication 7 ou 8, dans lequel ledit moyen génère la succession cycliquement de façon répétée.

10. Appareil selon la revendication 7, 8 ou 9, dans lequel ledit moyen (11 à 16) peut fonctionner également de telle sorte que le déplacement des bits de position (P1, etc...) depuis un octet d'asservissement de la succession jusqu'au suivant, soit au moins égal à la demi-largeur (Tw50/2) du bruit électromagnétique qui peut apparaître sur une forme d'onde de données d'asservissement (SD) lues sur le support d'enregistrement de données d'asservissement, ledit bruit électromagnétique étant synchrone avec des données d'asservissement (SD), étant provoqué par des opérations d'écriture de données en relation avec une tête d'enregistrement de données adjacente à une tête d'enregistrement de données d'asservissement, et présentant une forme d'onde similaire à la forme d'onde des données d'asservissement.

11. Appareil selon la revendication 7, 8, 9 ou 10, dans lequel le nombre d'octets de la succession est de 4.

12. Appareil selon la revendication 7, 8, 9, 10 ou 11, dans lequel le déplacement des bits de position, d'un octet d'asservissement de la succession au suivant, est de 20 nanosecondes.

13. Appareil selon la revendication 7, 8, 9, 10, 11 ou 12, dans lequel le moyen d'enregistrement de données magnétique est un dispositif à disque magnétique et le support d'enregistrement de données d'asservissement est un disque d'asservissement du dispositif.

14. Appareil d'enregistrement à disque magnétique, comprenant une tête de données pour écrire des données sur une piste d'un disque de données de l'appareil et une tête d'asservissement (24) pour lire des données d'asservissement (SD) sur une piste d'asservissement d'un disque d'asservissement de l'appareil, un dispositif de positionnement de tête (29) pour positionner la tête de données sur la piste du disque de données en fonction des données d'asservissement (SD) lues par la tête d'asservissement (24), les données d'asservissement (SD) incluant des octets d'asservissement dont chacun comprend un bit d'horloge (CB) et des bits de position (P1, P2, P3, P4) en des dispositions temporelles régulières dans l'octet qui sont espacées du bit d'horloge (CB),
caractérisé en ce que :
les octets d'asservissement forment une succession dans laquelle les dispositions temporelles (P1-1, P1-2, P1-3, P1-4, etc...) des bits de position (P1, etc ...) dans des octets successifs de la succession par rapport aux bits d'horloge respectifs (CB) contenus dans les octets, sont déplacées par rapport à ladite disposition régulière d'une faible fraction de la longueur d'un octet d'asservissement, d'un octet d'asservissement à un octet d'asservissement de la succession, lesquels sont situés sur une seule et même piste d'asservissement, et les dispositions temporelles relatives (P1-1, P1-2, P1-3, P1-4, etc...) des bits de position (P1, etc...) contenus dans les octets d'asservissement de la succession tombent toutes dans la largeur d'une impulsion de porte, laquelle largeur définit une plage sur laquelle des bits de position (P1, etc...) peuvent être détectés pour être utilisés dans un moyen de démodulation (44) de données d'asservissement (SD).

15. Appareil selon la revendication 14, dans lequel les dispositions temporelles relatives (P1-1, P1-2, P1-3, P1-4, etc...) des bits de position (P1, etc...), dans des octets successifs de la succession, par rapport aux bits d'horloge respectifs (CB) contenus dans les octets, forment une progression arithmétique, le déplacement (TSFT) des bits de position d'un octet d'asservissement de la succession au suivant représentant le terme de différence commun de la progression.

16. Appareil selon la revendication 14 ou 15, dans lequel la succession est répétée cycliquement dans les données d'asservissement.

17. Appareil selon la revendication 14, 15 ou 16, dans lequel le déplacement des bits de position, d'un octet d'asservissement de la succession au suivant, est au moins égal à la demi-largeur (Tw50/2) d'un bruit électromagnétique qui peut apparaître sur une forme d'onde de données d'asservissement (SD) lues sur le support d'enregistrement de données d'asservissement, ledit bruit électromagnétique étant synchrone avec des données d'asservissement (SD), étant provoqué par des opération d'écriture de données en relation avec une tête d'enregistrement de données adjacente à une tête de lecture de données d'asservissement, et présentant une forme d'onde similaire à la forme d'onde des données d'asservissement.

18. Appareil selon la revendication 14, 15, 16 ou 17, dans lequel le nombre d'octets de la succession est de 4.

19. Appareil selon la revendication 14, 15, 16, 17 ou 18, dans lequel le déplacement des bits de position (P1, etc...), d'un octet d'asservissement de la succession au suivant, est de 20 nanosecondes.
